# EUROPÄISCHE PATENTSCHRIFT

(11) **EP 1 222 498 B1**
(45) Veröffentlichungstag und Bekanntmachung des Hinweises auf die Patenterteilung: **03.12.2008**
(21) Anmeldenummer: 00967597.6
(22) Anmeldetag: 20.09.2000
(51) Int. Cl.: C08J 7/18, B05D 3/06

(54) **OBERFLÄCHENMODIFIZIERTES SCHICHTSYSTEM**
SURFACE-MODIFIED LAYER SYSTEM
SYSTEME STRATIFIE A SURFACE MODIFIEE

(30) Priorität: 24.09.1999 DE 19945935
(43) Veröffentlichungstag der Anmeldung: 17.07.2002
(73) Patentinhaber: Universität Heidelberg, 69117 Heidelberg (DE)
(72) Erfinder: GRUNZE, Michael, 69151 Neckargemünd (DE); ECK, Wolfgang, 69120 Heidelberg (DE); GÖLZHÄUSER, Armin, 69121 Heidelberg (DE); ZHARNIKOV, Michel, 69121 Heidelberg (DE); STADLER, Volker, 69118 Heidelberg (DE); GEYER, Wolfgang, 56567 Neuwied (DE)
(74) Vertreter: Müller-Boré & Partner Patentanwälte
(86) Internationale Anmeldenummer: PCT/DE2000/003264
(87) Internationale Veröffentlichungsnummer: WO 2001/023962

(56) Entgegenhaltungen:
- EP-A- 0 385 656
- EP-A- 0 511 590
- EP-A- 0 561 279
- EP-A- 0 593 875
- DE-A- 19 815 220
- US-A- 5 338 571
- US-A- 5 728 431
- WU C -G ET AL: "CHEMICAL DEPOSITION OF ORDERED CONDUCTING POLYPYRROLE FILMS ON MODIFIED INORGANIC SUBSTRATES" JOURNAL OF MATERIALS CHEMISTRY,GB,THE ROYAL SOCIETY OF CHEMISTRY, CAMBRIDGE, Bd. 7, Nr. 8, 1. August 1997 (1997-08-01), Seiten 1409-1413, XP000724094 ISSN: 0959-9428

## Beschreibung

Die vorliegende Erfindung betrifft ein oberflächenmodifiziertes Schichtsystem und ein Verfahren zu dessen Herstellung. Insbesondere betrifft die vorliegende Erfindung oberflächenmodifizierte Schichtsysteme, die ein Substrat und, darauf mindestens teilweise angeordnet, eine über Ankergruppen kovalent an mindestens eine Oberfläche des Substrats gebundene, in lateraler Richtung vernetzte Monoschicht, die aus niedermolekularen Aromaten aufgebaut ist, umfassen. Die aus niedermolekularen Aromaten aufgebaute, in lateraler Richtung vernetzte Monoschicht der erfindungsgemäßen oberflächenmodifizierten Schichtsysteme weist den Charakter eines quervernetzten Feststoffes auf und schützt somit die Oberflächen entsprechender Substrate in besonders vorteilhafter Weise vor Beschädigungen durch Reibung und Korrosion.

Oberflächen werden nach dem heutigen Stand der Technik meist durch auf darauf aufgetragene, physisorbierte dünne Flüssigkeitsfilme (z.B. Öle, Wachse) oder polymere Anstriche vor korrodierenden Einflüssen und mechanischen Belastungen durch Reibung geschützt. Diese herkömmlichen Filme besitzen üblicherweise Schichtdicken im Bereich einiger Mikrometer bis hin zu Millimetern. Ihre exakte Schichtdicke ist jedoch verfahrenstechnisch nur schwer zu kontrollieren.

Unvernetzte Monoschichten im Stand der Technik, insbesondere solche auf Basis aliphatischer Kohlenwasserstoffketten, besitzen eine geringe mechanische Stabilität und gewähren somit eine nur unzureichende Schutzwirkung. Darüberhinaus desorbieren unvernetzte Monoschichten bei Kontakt mit korrodierenden Agentien, da einzelne Moleküle an Defektstellen von der Oberfläche verdrängt werden und die Ablösung der Schicht von solchen Stellen aus fortschreitet. Übliche Verfahren zur Herstellung solcher unvernetzter Monoschichten organischer Moleküle auf verschiedenen Substraten sind beispielsweise in A. Ulman, "An Introduction to Ultrathin Films ", Academic Press, Boston 1991, sowie A. Ulman, Chem. Rev. 96, 1533 (1996), näher beschrieben.

Der vorliegenden Erfindung liegt somit die Aufgabe zugrunde, Beschichtungssysteme bereitzustellen, deren Beschichtungen hohe mechanische und chemische Stabilität aufweisen und die darunterliegende Substratoberfläche wirksam vor Beschädigung durch Reibung oder korrodierende Agentien schützen sollen. Die Schichtdicke derartiger Schutzschichten soll dabei exakt kontrollierbar sein und im Bereich von 0,3 nm bis 3 nm liegen. Solche Systeme sollen sich insbesondere zum Oberflächenschutz von mechanisch bewegten Geräten mit kleinen Arbeitsabständen im Mikro- oder Nanometerbereich, wie etwa Festplattenlaufwerke zur elektronischen Datenspeicherung, oder von mikromechanischen Geräten mit bewegten Teilen mit Dimensionen im Mikrometerbereich und darunter eignen.

Diese Aufgabe wird durch die in den Ansprüchen gekennzeichneten Ausführungsformen gelöst.

Insbesondere wird gemäß der vorliegenden Erfindung ein oberflächenmodifiziertes Schichtsystem bereitgestellt, umfassend ein Substrat und, darauf mindestens teilweise angeordnet, eine über Ankergruppen kovalent an mindestens eine Oberfläche des Substrats gebundene, in lateraler Richtung durch Behandlung mit Elektronenstrahlung, Plasmastrahlung, Röntgenstrahlung, β-Stahlung, γ-Strahlung oder UV-Strahlung vernetzte Monoschicht, die aus niedermolekularen Aromaten, ausgewählt aus der Gruppe, bestehend aus Phenyl, Biphenyl, Terphenyl, Naphthalin und Anthracen, aufgebaut ist.

Im Gegensatz zu den im Stand der Technik verfügbaren Beschichtungssystemen, z.B. auf Basis physisorbierter dünner Flüssigkeitsfilme oder polymerer Anstriche, sind die erfindungsgemäßen Schutzschichten aufgrund der räumlichen Ausdehnung der über Ankergruppen kovalent an die Substratoberfläche gebundenen Moleküle, welche die in lateraler Richtung vernetzte Monoschicht aufbauen, exakt kontrollierbar bzw. einstellbar.

Vorzugsweise weist die Monoschicht des erfindungsgemäßen oberflächenmodifizierten Schichtsystems eine Schichtdicke im Bereich von 0,3 nm bis 3 nm auf.

Durch die kovalente Bindung an die Substratoberfläche schützt die Monoschicht des erfindungsgemäßen oberflächenmodifizierten Schichtsystems die darunterliegende Substratoberfläche wirksam vor Beschädigung durch Reibung oder korrodierende Agentien.

Die in lateraler Richtung vernetzte Monoschicht des erfindungsgemäßen oberflächenmodifizierten Schichtsystems ist aus Aromaten, ausgewählt aus der Gruppe, bestehend aus Phenyl, Biphenyl, Terphenyl, Naphthalin und Anthracen aufgebaut.

In einer Ausführungsform der vorliegenden Erfindung kann die aus den niedermolekularen Aromaten aufgebaute Monoschicht an ihrer Oberfläche funktionelle Gruppen, ausgewählt aus Halogenatomen, Carboxy-, Trifluormethyl-, Amino-, Nitro-, Cyano-, Thiol-, Hydroxy- oder Carbonylgruppen, tragen. Die niedermolekularen Aromaten- moleküle bzw. -einheiten, welche die Monoschicht aufbauen, sind dabei mit Hilfe einer Ankergruppe chemisch an der darunterliegenden Substratoberfläche angekoppelt bzw. an diese kovalent gebunden.

Die Vernetzung der Monoschicht in lateraler Richtung kann durch Behandlung mit Elektronenstrahlung, Plasmastrahlung, Röntgenstrahlung, β-Strahlung, γ-Strahlung oder UV-Strahlung erzielt werden.

Vorzugsweise ist das Substrat, dem durch die erfindungsgemäße, in lateraler Richtung vernetzte Monoschicht hohe mechanische und chemische Stabilität verliehen wird und dessen Oberfläche somit wirksam vor Beschädigung durch Reibung oder korrodierende Agentien geschützt wird, aus der Gruppe, bestehend aus Gold, Silber, Titan, Zirkonium, Vanadium, Chrom, Mangan, Wolfram, Molybdän, Platin, Aluminium, Eisen, Stahl, Silicium, Germanium, Indiumphosphid, Galliumarsenid und Oxiden oder Legierungen oder Mischungen derselben sowie Indium-Zinn-Oxid (ITO) und Silikat- oder Boratgläsern, ausgewählt.

Wenn die Oberfläche des Substratmaterials atomar flach und homogen vorliegt, d.h. daß sie beispielsweise keine Stufenversetzungen oder Defekte aufweist, so ist auch die Schutzschicht atomar flach, homogen und defektfrei und bildet einen nahezu ideal glatten Schutzfilm auf der zu schützenden Substratoberfläche. Die Schutzschicht paßt sich der Morphologie des Substrats in nahezu idealer Weise an. Auf diese Weise lassen sich auch Objekte mit dreidimensionalen Oberflächenmorphologien mit einer vernetzten Schutzschicht definierter Dicke bedekken.

Die erfindungsgemäßen Monoschichten der oberflächenmodifizierten Schichtsysteme können auch elektrische Leitfähigkeit mittels Durchtritt von Elektronen oder Löchern zeigen. Dies ermöglicht die Nutzung der erfindungsgemäßen Monoschichten in Geräten, bei denen der Ladungsdurchtritt durch die Oberfläche durch eine stabile Schutzschicht kontrolliert werden soll, wie beispielsweise in beschichteten elektronischen Bauelementen oder Elektroden.

Die Ankergruppe, mit der die erfindungsgemäßen Monoschichten auf dem Substratmaterial chemisch verankert sind, ist vorzugsweise aus der Gruppe, bestehend aus Carboxy-, Thio-, Trichlorsilyl-, Trialkoxysilyl-, Phosphonat-, Hydroxamsäure- und Phosphatgruppen, ausgewählt, wobei die Ankergruppen mit Hilfe eines Abstandshalters mit einer Länge von 1 bis zu 10 Methylengruppen an die in lateraler Richtung vernetzte, aus niedermolekularen Aromaten aufgebaute Monoschicht kovalent gebunden sein können.

Die Natur der Ankergruppe ist an das jeweilige Substratmaterial anzupassen, wie es für einen Fachmann bekannt ist. Beispielsweise eignen sich für oxidierte Siliciumoberflächen insbesondere Trichlor- oder Trialkoxysilane, wie z.B. Trimethoxysilan, Triethoxysilan, etc., als Ankergruppen. Für hydrierte Silciumoberflächen können Alkoholgruppen zur Verankerung eingesetzt werden. Für Gold- und Silberoberflächen kommen z.B. Thiogruppen als Ankergruppen in Frage, für oxidierte Metalloberflächen wie Eisen oder Chrom sind Phosphonsäuren, Carbonsäuren oder Hydroxamsäuren geeignet.

In einer besonders bevorzugten Ausführungsform der vorliegenden Erfindung umfaßt das oberflächenmodifizierte Schichtsystem eine aus Biphenyl-Einheiten aufgebaute Monoschicht, die über Thiogruppen als Ankergruppen an die entsprechende Substratoberfläche, wie z.B. Gold- oder Silberoberflächen, kovalent gebunden ist.

Ein weiterer Gegenstand der vorliegenden Erfindung ist die Bereitstellung eines Verfahrens zur Herstellung der erfindungsgemäßen, oberflächenmodifizierten Schichtsysteme, umfassend die Schritte:
(a) Bereitstellen eines Substrats,
(b) gegebenenfalls Modifizieren der Oberfläche des Substrats,
(c) Aufbringen einer Monoschicht aus niedermolekularen Aromaten unter kovalenter Bindung über Ankergruppen auf eine Oberfläche des Substrats und
(d) Behandeln des in Schritt (c) erhaltenen Substrats mit energiereicher Strahlung derart, daß die über Ankergruppen kovalent an die Oberfläche des Substrats gebundene, aus niedermolekularen Aromaten aufgebaute Monoschicht kovalent in lateraler Richtung vernetzt wird.

Überraschenderweise wurde im Rahmen der vorliegenden Erfindung gefunden, daß die in Schritt (c) aufgebrachten Monoschichten bei Behandlung mit energiereicher Strahlung, vorzugsweise Röntgenstrahlung, β-Strahlung, γ-Strahlung oder UV-Strahlung, kovalent in lateraler Richtung vernetzen, so daß eine chemisch völlig kovalent gebundene, dünne und feste Schutzschicht auf der Substratoberfläche entsteht. Durch die Vernetzung in lateraler Richtung erlangen die aus den niedermolekularen Aromaten aufgebauten Monoschichten hohe mechanische und chemische Stabilität und schützen die darunterliegende Substratoberfläche wirksam vor Beschädigung durch Reibung oder korrodierende Agentien.

In einer Ausführungsform des erfindungsgemäßen Verfahrens kann in Schritt (d) das Vernetzen unter lateraler Strukturierung mittels feinfokussierter ionisierender Elektronen-, lonen- oder Photonenstrahlung durchgeführt werden. Die Fokussierung und das Rastern des Strahls über die zu strukturierenden Bereiche kann durch elektronenoptische oder ionenoptische Elemente geschehen, wie beispielsweise bei der Elektronenstrahllithographie mit Rasterelektronenmikroskopen oder der Lithographie mit fokussierten Ionen (FIB). Vorzugsweise kann die Strukturierung auch mittels Nahsondenverfahren durchgeführt werden. Die Fokussierung von Elektronen, Ionen oder Photonen ist bei diesen durch die Kleinheit der Elektronen-, lonen- oder Photonenquelle (Nahsonde) gewährleistet. Die Nahsonde wird dann in Abständen zwischen 0,1 und 1000 nm über die zu strukturierenden Bereiche geführt. Als Nahsonde für Elektronen eignen sich insbesondere die Spitzen von Rastertunnelmikroskopen (STM), Rasterkraftmikroskopen (AFM) und atomar definierte Feldemitterspitzen, die z.B. nach dem Verfahren von Müller et al. (Ultramicroscopy 50, 57 (1993)) hergestellt wurden. Letztere eignen sich besonders als Nahsonden zur Strukturierung bei größeren Abständen (> 10 nm) zwischen Sonde und Probe und können auch als Quellen für Feldionen verwendet werden. Zur Strukturierung mit Photonen eignen sich feine Spitzen aus Glas oder einem anderen photonenleitenden Material, wie sie in optischen Nahfeldmikroskopen (SNOM) verwendet werden. Bei allen Nahsondenverfahren wird die Nahsonde mittels einer Positioniereinheit, z. B. aus piezokeramischen Elementen, direkt über die zu belichtenden Bereiche plaziert.

Werden in Schritt (c) anstelle einer Monoschicht aus niedermolekularen Aromaten beispielsweise gesättigte, kovalent mittels einer Ankergruppe an der Substratoberfläche gebundene Moleküle bzw. Einheiten wie Cyclohexyl, Bicyclohexyl, Tercyclohexyl, partiell oder vollständig hydrierte Naphthaline oder Anthracene aufgebracht, so kann im Wege der Behandlung mit energiereicher Strahlung im Schritt (d) neben der Vernetzung in lateraler Richtung eine Dehydrierung zu den entsprechenden Aromaten erfolgen. Wenn an der Oberfläche der aus den niedermolekularen Aromaten aufgebauten Monoschicht Nitrogruppen gebunden sind, kann in Schritt (d) des erfindungsgemäßen Verfahrens im Einwirkungsbereich der vernetzenden Strahlung auch eine Umwandlung dieser Nitrogruppen in Aminogruppen erfolgen.

In einer weiteren Ausführungsform des erfindungsgemäßen Verfahrens kann das Behandeln mit energiereicher Strahlung unter Verwendung einer Lochmaske derart durchgeführt werden, daß nur räumlich definierte Bereiche der auf der Substratoberfläche aufgebrachten Monoschicht belichtet werden, wodurch eine strukturierte Oberfläche auf dem Substrat mit geschützten und ungeschützten Bereichen entsteht, d. h. die belichten Bereiche werden geschützt. Das erfindungsgemäße oberflächenmodifizierte Schichtsystem kann somit auch als Negativresist eingesetzt werden.

Zur Bestrahlung mit Elektronen kann eine großflächig ausleuchtende Elektronenquelle, z. B. eine "flood gun" oder ein Aufbau, wie in Abb. 2 von Hild et al., Langmuir, 14, 342-346(1998), beschrieben, verwendet werden. Die verwendeten Elektronenenergien können dabei in einem großen Bereich, vorzugsweise 1 bis 1000 eV, den jeweiligen organischen Filmen und ihren Substraten angepaßt werden. Beispielsweise kann zur Vernetzung von Biphenyl-4-thiol auf Gold Elektronenstrahlung mit 50 eV verwendet werden.

Zur lateralen Strukturierung kann eine großflächig ausleuchtende Elektronenquelle in Verbindung mit einer Lochmaske verwendet werden, so daß nur die offenen Bereiche den Elektronen ausgesetzt werden. Zur lateralen Strukturierung eignen sich ebenfalls fokussierte Elektronenstrahlen, die durch ein Rasterelektronenmikroskop über die zu vernetzenden Bereichen positioniert werden können. Weiterhin können Elektronenquellen wie z. B. Feldemitterspitzen, aus der Elektronen in einen kleinen Winkelbereich emittiert werden, direkt verwendet werden, wenn sie mittels geeigneter Verstellelemente (Schrittmotoren, Piezotranslatoren) über die zu vernetzenden Bereichen positioniert werden.

Zur großflächigen Vernetzung mittels elektromagnetischer Strahlung (z.B. Röntgenstrahlung, UV-Strahlung) können im Stand der Technik verfügbare Lichtquellen verwendet werden. Zur lateralen Strukturierung bieten sich für den jeweiligen Wellenlängenbereich geeignete Masken oder das Abrastern mittels geeigneter Lichtleiter an.

Die erfindungsgemäßen, durch Strahlung in lateraler Richtung vernetzten Monoschichten weisen eine deutliche Reduktion der Beanspruchung des Substratmaterials durch mechanische und chemische Beanspruchung auf. Standard-Korrosionstests nach DIN 50905 mit elektronenvernetzten Biphenylmonoschichten auf Stahl (Ankergruppe: Phosphonsäure), Gold und Silber (Ankergruppe: Thiol) zeigen eine Reduzierung des anodischen Stromflusses und der Lochbildung um bis zu 99,5%. Reibungstests nach DIN 50281 auf beschichteten Siliciumoberflächen mit elektronenvernetzten Biphenylmonoschichten und Trichlorosilylgruppen als Ankergruppe zeigen eine Reduktion des Abriebs um bis zu 95%.

Die Oberfläche des Substrats kann vor dem Aufbringen der Monoschicht einer Reinigung oder chemischen Modifizierung unterworfen werden. Die Reinigung kann durch einfaches Abspülen der Oberfläche mit Wasser oder organischen Lösungsmitteln wie Ethanol, Aceton oder Dimethylformamid oder durch Behandlung mit einem durch UV-Strahlung erzeugten Sauerstoff-Plasma erfolgen. Wenn die Monoschichten mit Ankergruppen wie Phosphonsäure-, Carbonsäure- oder Hydroxamsäuregruppen auf oxidierten Metalloberflächen aufgebracht werden sollen, ist eine vorherige kontrollierte Oxidation der Metalloberfläche vorteilhaft. Diese kann durch Behandlung der Metalloberfläche mit oxidierenden Agentien wie Wasserstoffperoxid, Caro'scher Säure oder Salpetersäure erfolgen. Eine weitere Möglichkeit zur Modifizierung einer Substratoberfläche besteht im Aufbringen einer ersten organischen Monoschicht mit terminalen reaktiven Gruppen wie Amino-, Hydroxy-, Chlor-, Brom-, Carboxy-, oder Isocyanatgruppen, an die in einem zweiten Schritt die eigentlich zu vernetzende Monoschicht mittels geeigneter funktioneller Gruppen chemisch angekoppelt wird.

In Schritt (c) des erfindungsgemäßen Verfahrens kann das Aufbringen beispielsweise durch Tauch-, Gieß-, Spinschleuderverfahren oder durch Adsorption aus verdünnter Lösung durchgeführt werden.

Der mechanische Abrieb von unvernetzten Monoschichten aus einzelnen Molekülen geht schneller und in höherem Ausmaß vonstatten als bei den erfindungsgemäßen vernetzten Monoschichten der oberflächenmodifizierten Schichtsysteme. Ferner führt bei aliphatischen Kohlenwasserstoffketten die Behandlung mit energiereicher Strahlung zur Zerstörung der Monoschichten.

Die erfindungsgemäßen aromatischen Monoschichten eignen sich vor allem zum Oberflächenschutz von Substraten, die als mechanisch bewegte Geräte mit kleinen Arbeitsabständen im Mikro- oder Nanometerbereich eingesetzt werden. Insbesondere sind sie zur Verwendung auf Substraten, wie Festplatten zur magnetischen Datenspeicherung, auf mikromechanischen Geräten, Disketten oder Compact Disks, geeignet. Ferner können sie als molekularer Negativresist bei der Herstellung integrierter elektrischer Schaltkreise und mikromechanischer Bauteile eingesetzt werden.

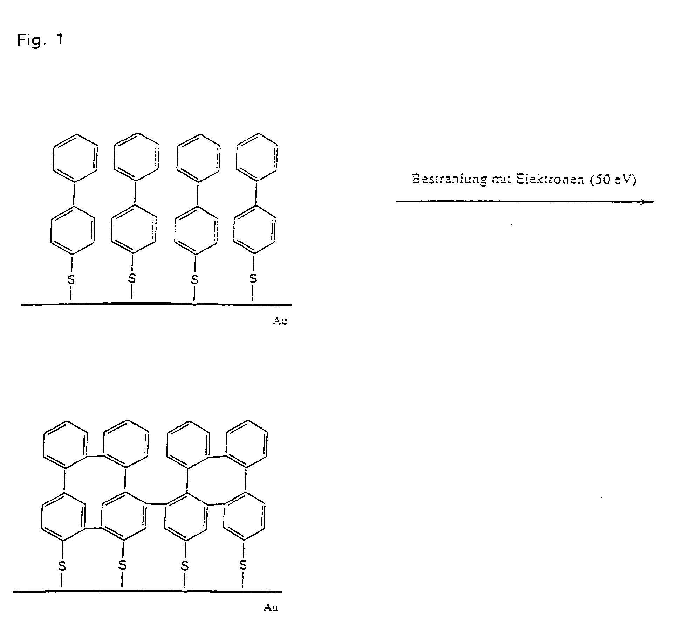

Figur 1 zeigt die schematische Darstellung eines erfindungsgemäßen oberflächenmodifizierten Schichtsystems, erzeugt durch Bestrahlung einer auf einer Goldoberfläche aus Biphenyl-4-thiol-Molekülen aufgebauten Monoschicht mit Elektronenstrahlung (50 eV).

Die vorliegende Erfindung wird durch die nachstehenden Beispiele näher erläutert.

### Beispiel 1

Eine Monoschicht von 4-Biphenylthiol auf Gold wird hergestellt, indem ein mit einer 100 nm dicken Goldschicht bedampfter Siliziumwafer eine Stunde lang in eine 1 mmolare ethanolische Lösung von 4-Biphenylthiol gebracht wird. Anschließend wird der Wafer herausgenommen, mehrfach mit Ethanol p.a. abgespült und im Stickstoffstrom getrocknet. Zur Vernetzung der Schichten wird der Wafer mit der Monoschicht in einer Vakuumkammer (p = 10⁻⁵ bis 10⁻⁹ mbar) mit einer "Leybold flood gun" (Typ 869000) mit Elektronen der Energie 100 eV und einer Dosis von 40.000 µC/cm² bestrahlt. Nach dem Herausnehmen aus der Vakuumkammer kann die Schicht unmittelbar ihrem Verwendungszweck zugeführt oder chemisch weiter funktionalisiert werden.

### Beispiel 2

Nach mehrfachem Reinigen einer Oberfläche von rostfreiem Stahl mit üblichen organischen Detergens-Lösungen und mehrfachem Abspülen mit entionisiertem Wasser wird eine Monoschicht von Terphenyl-4-phosphonsäure durch Behandeln der gereinigten Oberfläche mit einer 1 mmolaren Lösung der Terphenylphosphonsäure in Dimethylformamid hergestellt. Nach 12 Stunden ist die Monoschicht ausgebildet und das Stahlsubstrat wird je einmal mit reinem Dimethylformamid und mit entionisiertem Wasser abgespült. Danach wird die Monoschicht in gleicher Weise wie in Beispiel 1 bestrahlt und vernetzt. Die Elektronenenergie kann hierbei bis auf 200 eV angehoben werden. Zur vollständigen Vernetzung genügt eine Dosis von 30.000 µC/cm².

### Beispiel 3

Ein Zahnrad aus Silicium mit einem Durchmesser von 500 µm wird 1 min lang in eine Mischung aus 3 Teilen 30% Wasserstoffperoxid und 1 Teil konz. Schwefelsäure gebracht. Danach wird es mit entionisiertem Wasser abgespült und in eine 1 mmolare Lösung von 4-Trichlorsilylbiphenyl in Tetrahydrofuran gebracht. Nach zwei Stunden wird das Zahnrad herausgenommen, mit Tetrahydrofuran abgespült, im Stickstoffstrom getrocknet und der gleichen Bestrahlungs- und Vernetzungsprozedur wie in Beispiel 1 unterworfen. Es wird eine stabile und durchgängig vernetzte Oberflächenschicht erhalten, die das Zahnrad wirksam vor mechanischem Abrieb schützt.

### Beispiel 4

Es werden analog zu Beispiel 1 Monoschichten von 4,4'-Nitrobiphenylthiol auf einer Goldoberfläche hergestellt. Vor der Bestrahlung wird die Schicht mit einer metallischen Lochmaske abgedeckt. Nach der Bestrahlung, die wie in Beispiel 1 durchgeführt wird, sind die Nitrogruppen an den belichteten Stellen zu Aminogruppen umgewandelt worden und die Schicht ist an diesen Stellen vernetzt. Die übrigen, von der Maske abgedeckten Bereiche der Schicht bleiben unverändert.

Die durch die Bestrahlung entstandenen Aminogruppen können beispielsweise nachfolgend durch Behandlung mit einem Isocyanat, einem Säurechlorid oder Säureanhydrid aus Lösung in einem organischen Lösungsmittel wie Tetrahydrofuran oder Aceton acyliert werden.

## Patentansprüche

1. Oberflächenmodifiziertes Schichtsystem, umfassend ein Substrat und, darauf mindestens teilweise angeordnet, eine über Ankergruppen kovalent an mindestens eine Oberfläche des Substrats gebundene, in lateraler Richtung durch Behandlung mit Elektronenstrahlung, Plasmastrahlung, Röntgenstrahlung, β-Strahlung, γ-Strahlung oder UV-Strahlung vernetzte Monoschicht, die aus niedermolekularen Aromaten,
ausgewählt aus der Gruppe, bestehend aus Phenyl, Biphenyl, Terphenyl, Naphthalin und Anthracen, aufgebaut ist.

2. Oberflächenmodifiziertes Schichtsystem nach Anspruch 1, wobei die Ankergruppen ausgewählt sind aus der Gruppe, bestehend aus Carboxy-, Thio-, Trichlorsilyl-, Trialkoxysilyl-, Phosphonat-, Hydroxamsäure- und Phosphatgruppen.

3. Oberflächenmodifiziertes Schichtsystem nach Anspruch 2, wobei die Ankergruppen mit Hilfe eines Abstandshalters mit einer Länge von 1 bis zu 10 Methylengruppen an die in lateraler Richtung vernetzte, aus niedermolekularen Aromaten aufgebaute Monoschicht kovalent gebunden sind.

4. Oberflächenmodifiziertes Schichtsystem nach einem der Ansprüche 1 bis 3, wobei das Substrat ausgewählt ist aus der Gruppe, bestehend aus Gold, Silber, Titan, Zirkonium, Vanadium, Chrom, Mangan, Wolfram, Molybdän, Platin, Aluminium, Eisen, Stahl, Silicium, Germanium, Indiumphosphid, Galliumarsenid und Oxiden oder Legierungen oder Mischungen derselben sowie Indium-Zinn-Oxid und Silikat- oder Boratgläsern.

5. Oberflächenmodifiziertes Schichtsystem nach einem der Ansprüche 1 bis 4, wobei die aus niedermolekularen Aromaten aufgebaute Monoschicht an ihrer Oberfläche funktionelle Gruppen trägt, ausgewählt aus Halogenatomen, Carboxy-, Trifluormethyl-, Amino-, Nitro-, Cyano-, Thiol-, Hydroxy- oder Carbonylgruppen.

6. Oberflächenmodifiziertes Schichtsystem nach einem der Ansprüche 1 bis 5, wobei die Monoschicht aus Biphenyleinheiten aufgebaut ist und die Ankergruppen Thiogruppen sind.

7. Oberflächenmodifiziertes Schichtsystem nach einem der Ansprüche 1 bis 6, wobei die Monoschicht eine Schichtdicke im Bereich von 0,3 bis 3 nm aufweist.

8. Verfahren zur Herstellung des oberflächenmodifizierten Schichtsystems nach einem der Ansprüche 1 bis 7, umfassend die Schritte:
(a) Bereitstellen eines Substrats,
(b) gegebenenfalls Modifizieren der Oberfläche des Substrats,
(c) Aufbringen einer Monoschicht aus niedermolekularen Aromaten unter kovalenter Bindung über Ankergruppen auf eine Oberfläche des Substrats und
(d) Behandeln des in Schritt (c) erhaltenen Substrats mit energiereicher Strahlung derart, daß die über Ankergruppen kovalent an die Oberfläche des Substrats gebundene, aus niedermolekularen Aromaten aufgebaute Monoschicht kovalent in lateraler Richtung vernetzt wird.

9. Verfahren nach Anspruch 8, wobei in Schritt (d) die energiereiche Strahlung Elektronenstrahlung, Plasmastrahlung, Röntgenstrahlung, β-Strahlung, γ-Strahlung oder UV-Strahlung ist.

10. Verfahren nach Anspruch 8 oder 9, wobei in Schritt (d) das Vernetzen unter lateraler Strukturierung mittels feinfokussierter ionisierender Elektronen-, lonen- oder Photonenstrahlung durchgeführt wird.

11. Verfahren nach Anspruch 10, wobei die Strukturierung mittels einer Nahsonde (STM, AFM, SNOM) durchgeführt wird.

12. Verfahren nach einem der Ansprüche 8 bis 11, wobei das Behandeln mit energiereicher Strahlung unter Verwendung einer Lochmaske derart durchgeführt wird, daß nur räumlich definierte Bereiche der auf der Substratoberfläche aufgebrachten Monoschicht belichtet werden.

13. Verfahren nach einem oder mehreren der Ansprüche 8 bis 12, worin in Schritt (c) das Aufbringen durch Tauch-, Gieß-, Spinschleuderverfahren oder durch Adsorption aus verdünnter Lösung durchgeführt wird.

## Claims

1. Surface-modified layer system comprising a substrate and, at least partially disposed thereon, a monolayer covalently bonded via anchor groups to at least one surface of the substrate and laterally crosslinked by treatment with electron radiation, plasma radiation, x-ray radiation, β-radiation, γ-radiation or UV radiation and composed of low molecular weight aromatics selected from the group consisting of phenyl, biphenyl, terphenyl, naphthalene and anthracene.

2. Surface-modified layer system according to Claim 1, wherein the anchor groups are selected from the group consisting of carboxy, thio, trichlorosilyl, trialkoxysilyl, phosphonate, hydroxamic acid and phosphate groups.

3. Surface-modified layer system according to Claim 2, wherein the anchor groups are covalently bonded to the laterally crosslinked monolayer composed of low molecular weight aromatics with the help of a spacer with a length from 1 to 10 methylene groups.

4. Surface-modified layer system according to any one of Claims 1 to 3, wherein the substrate is selected from the group consisting of gold, silver, titanium, zirconium, vanadium, chromium, manganese, tungsten, molybdenum, platinum, aluminium, iron, steel, silicon, germanium, indium phosphide, gallium arsenide and oxides or alloys or mixtures thereof and also indium-tin oxide and silicate or borate glasses.

5. Surface-modified layer system according to any one of Claims 1 to 4, wherein the monolayer composed of low molecular weight aromatics bears on its surface functional groups selected from halogen atoms and carboxy, trifluoromethyl, amino, nitro, cyano, thiol, hydroxy or carbonyl groups.

6. Surface-modified layer system according to any one of Claims 1 to 5, wherein the monolayer is composed of biphenyl units and the anchor groups are thio groups.

7. Surface-modified layer system according to any one of Claims 1 to 6, wherein the monolayer has a layer thickness in the range from 0.3 to 3 nm.

8. Method for the production of the surface-modified layer system according to any one of Claims 1 to 7, comprising the steps of:
(a) providing a substrate,
(b) modifying the surface or the substrate, if necessary,
(c) applying a monolayer of low molecular weight aromatics to a surface of the substrate by covalent bonding via anchor groups, and
(d) treating the substrate obtained in step (c) with high-energy radiation such that the monolayer composed of low molecular weight aromatics which is covalently bonded to the surface of the substrate via anchor groups is covalently crosslinked in the lateral direction.

9. Method according to Claim 8, wherein the high-energy radiation in step (d) is electron radiation, plasma radiation, x-ray radiation, β-radiation, γ-radiation or UV radiation.

10. Method according to Claim 8 or 9, wherein the crosslinking in step (d) is carried out by lateral structuring by means of finely focused ionizing electron, ion or photon radiation.

11. Method according to Claim 10, wherein the structuring is carried out by means of a local probe (STM, AFM, SNOM).

12. Method according to any one of Claims 8 to 11, wherein the treating with high-energy radiation is carried out using a shadow mask such that only spatially defined regions of the monolayer applied to the substrate surface are exposed.

13. Method according to one or more of Claims 8 to 12, wherein the applying in step (c) is carried out by dipping, casting, spin-coating processes or by adsorption from dilute solution.

## Revendications

1. Système stratifié à surface modifiée, comprenant un substrat, et disposée sur celui-ci, une monocouche liée de façon covalente par le biais d'un groupe d'ancrage, à au moins une surface du substrat, réticulée dans le sens latéral par traitement par rayonnement d'électrons, rayonnement de plasma, rayonnement de rayons X, rayonnement de rayons β, rayonnement de rayon γ ou rayonnement UV, qui est choisi dans le groupe comprenant les groupes phényle, biphényle, terphényle, naphtaline et anthracine.

2. Système stratifié à surface modifiée selon la revendication 1, dans lequel les groupes d'ancrage sont choisis dans le groupe comprenant les groupes carboxy, thio, trichlorosilyle, trialcoxysilyle, phosphonate, acide hydroxamique et des groupes phosphate.

3. Système stratifié à surface modifiée selon la revendication 2, dans lequel les groupes d'ancrage sont liés de façon covalente à l'aide d'un séparateur présentant une longueur de 1 à 10 groupes méthylène sur la monocouche constituée de composés aromatiques de bas poids moléculaire, réticulée dans le sens latéral.

4. Système stratifié à surface modifiée selon l'une des revendications 1 à 3, dans lequel le substrat est choisi dans le groupe comprenant l'or, l'argent, le titane, le zirconium, le vanadium, le chrome, le manganèse, le wolfram, le molybdène, le platine, l'aluminium, le fer, l'acier, le silicium, le germanium, le phosphure d'indium, l'arséniure de galium et des oxydes ou alliages ou mélanges de ceux-ci et de l'oxyde d'indium-étain ou des verres de silicate ou de borate.

5. Système stratifié à surface modifiée selon l'une des revendications 1 à 4, dans lequel la monocouche constituée de composés aromatiques de bas poids moléculaire porte sur sa surface des groupes fonctionnels choisis parmi des atomes d'halogène, les groupes carboxy, trifluorométhyle, amino, nitro, cyano, thiol, hydroxy ou carbonyle.

6. Système stratifié à surface modifiée selon l'une des revendications 1 à 5, dans lequel la monocouche est constituée de motifs de biphényle et les groupes d'ancrage sont des groupes thio.

7. Système stratifié à surface modifiée selon l'une des revendications 1 à 6, dans lequel la monocouche présente une épaisseur de couche de l'ordre de 0,3 à 3 nm.

8. Procédé de production du système stratifié à surface modifiée selon l'une des revendications 1 à 7, comprenant les étapes consistant à :
(a) se munir d'un substrat,
(b) modifier éventuellement la surface du substrat,
(c) appliquer une monocouche de composés aromatiques de bas poids moléculaire avec une liaison covalente par le biais de groupes d'ancrage sur une surface du substrat et
(d) traiter le substrat obtenu à l'étape (c) avec un rayonnement riche en énergie de telle sorte que la monocouche liée de façon covalente par le biais de groupes d'ancrage à la surface du substrat, constituée de composés aromatiques de bas poids moléculaire, soit réticulée de façon covalente dans le sens latéral.

9. Procédé selon la revendication 8, dans lequel à l'étape (d), le rayonnement riche en énergie, est un rayonnement d'électrons, un rayonnement de plasma, un rayonnement de rayons X, un rayonnement d rayons β, un rayonnement de rayons γ ou un rayonnement UV.

10. Procédé selon la revendication 8 ou 9, dans lequel à l'étape (d), la réticulation est réalisée par structuration latérale au moyen d'un rayonnement d'électrons, d'ions ou de photons ionisants à focalisation fine.

11. Procédé selon la revendication 10, dans lequel la structuration est réalisée au moyen d'une sonde locale (STM, AFM, SNOM).

12. Procédé selon l'une des revendications 8 à 11, dans lequel le traitement est réalisé avec un rayonnement riche en énergie en utilisant un masque perforé de telle sorte que seules des zones définies spatialement de la monocouche appliquée sur la surface du substrat soit irradiée.

13. Procédé selon une ou plusieurs des revendications 8 à 12, dans lequel à l'étape (c), l'application est réalisée par un procédé d'immersion, de coulage, de filage ou par absorption à partir d'une solution diluée.
